# EUROPÄISCHE PATENTSCHRIFT

(11) **EP 1 065 782 B1**
(45) Veröffentlichungstag und Bekanntmachung des Hinweises auf die Patenterteilung: **23.04.2003**
(21) Anmeldenummer: 99112434.8
(22) Anmeldetag: 30.06.1999
(51) Int. Cl.: H02K 9/12, H02K 9/24, H02J 9/00, H02K 7/02

(54) **Vorrichtung zur unterbrechungsfreien Stromversorgung mit Luftkühlung**
Device for supplying uninterrupted power with air cooling
Dispositif d'alimentation ininterrompue en courant électrique avec réfroidissement par air

(43) Veröffentlichungstag der Anmeldung: 03.01.2001
(73) Patentinhaber: RWE Piller GmbH, 37520 Osterode am Harz (DE)
(72) Erfinder: Darrelmann, Hilmar, 37520 Osterode (DE); Briest, Ralf Dr., 37520 Osterode (DE); Ueffing, Norbert, 37520 Osterode (DE)
(74) Vertreter: Patentanwälte Rehberg + Hüppe

(56) Entgegenhaltungen:
- CH-A- 109 778
- DE-A- 1 813 592
- US-A- 4 580 071

## Beschreibung

Die Erfindung bezieht sich auf eine Vorrichtung zur unterbrechungsfreien Stromversorgung nach dem Oberbegriff des Patentanspruchs 1.

Bei Vorrichtungen zur unterbrechungsfreien Stromversorgung wird typischerweise zwischen statischen und dynamischen USV's (USV = unterbrechungsfreie Stromversorgung) unterschieden, wobei statische USV's die Unterbrechungen einer Wechsel- oder Drehstromquelle mit Hilfe von in Akkumulatoren gespeicherter elektrische Energie überbrücken, während dynamische USV's hierfür auf die in einer rotierenden Schwungmasse gespeicherte kinetische Energie zurückgreifen. Zum Bereithalten dieser kinetischen Energie wird permanent eine elektrische Maschine betrieben. Sie wird als Motor betrieben, solange die Wechseloder Drehstromquelle Strom liefert. Beim Ausfall der Wechseloder Drehstromquelle wird auf einen Generatorbetrieb umgeschaltet, um die gespeicherte kinetische Energie zu nutzen.

Die vorliegende Erfindung bezieht sich grundsätzlich sowohl auf statische als auch auf dynamische USV's. Der Anwendungsschwerpunkt liegt jedoch bei dynamischen USV's.

Die von einem Leistungsstrom durchflossenen elektronischen und elektrischen Bauteile einer USV müssen gekühlt werden. Die Verlustleistungen dieser Bauteile sind auch bei relativ hohen Wirkungsgraden der USV's von typischerweise 95 bis 99 % absolut gesehen so groß, daß sie sich ohne eine Kühlung sehr schnell bis zur Selbstzerstörung aufheizen würden.

Bei bekannten Vorrichtungen mit den Merkmalen des Oberbegriffs des Anspruchs 1 wird Außenluft aus der Umgebung des Gehäuses, das die elektrischen und elektronischen Bauteile der USV beherbergt, angesaugt, in dem Gehäuse zur Kühlung der Bauteile umgewälzt und dann wieder ausgeblasen. Bei dynamischen USV's ist es bekannt, für die Umwälzung der Luft einen sowieso umlaufenden Rotor einer von einem Leistungsstrom durchflossenen elektrischen Maschine mit Luftförderorgangen zu versehen. Bei einer statischen USV müssen extra angetriebene Luftförderorgane vorgesehen werden. Wenn die bekannten USV's mit den Merkmalen des Oberbegriffs des Patentanspruchs 1 in einem abgeschlossenen Innenraum eines Gebäudes angeordnet werden, ist es notwendig, die Luft in dem Innenraum, die als Kühlluftreservoir für die jeweilige USV dient, ihrerseits zu kühlen. Hierzu wird typischerweise eine Klimaanlage für den Innenraum vorgesehen. Bei größeren Gebäuden mit Klimaanlagen in verschiedenen Räumen ist es dann üblich, daß die Abwärme der Klimaanlagen durch ein spezielles Kühlwassersystem abgeführt und in einem zentralen Wärmetauscher an die Außenluft abgegeben wird.

Bei den bekannten USV's mit den Merkmalen des Oberbegriffs des Patentanspruchs 1 ist es ein bekanntes Problem, daß durch das Ansaugen von Luft aus der Umgebung der USV als Kühlluft in das Gehäuse der USV auch Verunreinigungen mit angesaugt werden. Diese Verunreinigungen können sich innerhalb des Gehäuses der USV aufbauen und dort zu thermischen und/oder elektrischen Problemen, wie beispielsweise Kurzschlüssen, führen, die nicht nur den Betrieb der USV sondern auch ihren Grundbestand gefährden. Kritische Verunreinigungen der Außenluft sind nicht nur in emissionsbelasteten Umgebungen vorhanden. Hierfür kann auch salzhaltige Luft in Meeresnähe ausreichen. Eine Aufbereitung der Umgebungsluft beim Ansaugen in das Gehäuse der jeweiligen USV würde nicht nur zusätzlichen apparativen und Wartungsaufwand erfordern, sondern wäre auch mit einer Erhöhung der Verlustleistung der USV verbunden. Bei in abgeschlossenen Innenräumen angeordneten bekannten USV's mit den Merkmalen des Oberbegriffs des Patentanspruchs 1 ist die Gefahr von sich aufbauenden Verunreinigungen in dem Gehäuse der jeweiligen USV zwar normalerweise deutlich reduziert. Hier ist aber der erhöhte Aufwand durch die zusätzliche Klimaanlage für den Innenraum des Gebäudes als nachteilig anzusehen.

Aus der DE 1 813 592 A1 ist eine Sicherheitseinrichtung für Erregeranordnung elektrischer Maschinen, insbesondere für bürstenlose Erregersätze von Turbogeneratoren, bekannt. Die Sicherheitseinrichtung betrifft konkret die Ausbildung der Luftkühlung der Erregeranordnungen im geschlossenen Kreislauf. Dieser geschlossene Kreislauf umfasst ein die Erregeranordnungen umschließendes Gehäuse und Kühlluftfördermittel zum Ansaugen von Kühlluft in das Gehäuse, zum Umwälzen der Kühlluft in dem Gehäuse und zum Ausblasen der Kühlluft aus dem Gehäuse, um Wärmeenergie abzuführen. Ausgeblasen wird die Kühlluft in einem Kühlluftkanal, aus welchem die Kühlluft im Normalberieb durch einen Kühler zurück in das Gehäuse gelangt, wobei die abgeführte Wärmeenergie an den Kühler abgegeben wird. Die Sicherheitseinrichtung umfasst eine Umgehungsmöglichkeit des Kühlers für die in das Gehäuse angesaugte Kühlluft. Im Falle eines Ausfalls des Kühlers, bei dem es zu einer unerwünschten Temperaturerhöhung der zu kühlenden Teile des Erregersatzes kommt, wird die aus dem Gehäuse ausgeblasene Kühlluft also nicht mehr in den Kühler sondern in einen Abluftkanal gelenkt; dafür wird aus der Umgebung des Gehäuses neue Kühlluft angesaugt, die unter Umgehung des Kühlers direkt in das Gehäuse eintritt.

Der Erfindung liegt die Aufgabe zugrunde, eine Vorrichtung nach dem Oberbegriff des Patentanspruchs 1 aufzuzeigen, bei der mit geringem apparativen Aufwand die Gefahr des Aufbauens von Verunreinigungen in dem Gehäuse der USV vermieden wird, ohne daß hierzu andere Abhängigkeiten und Betriebsrisiken in Kauf genommen werden müssen.

Erfindungsgemäß wird diese Aufgabe durch eine Vorrichtung mit den Merkmalen des Patentanspruchs 1 gelöst. Vorteilhafte Ausführungsformen der Vorrichtung sind in den Unteransprüchen 2 bis 9 beschrieben.

Die erfindungsgemäße USV unterscheidet sich vom Stand der Technik durch zwei miteinander verknüpfte Maßnahmen. Zum einen wird für die normale störungsfreie Betriebsweise der USV die Kühlluft in einem gegenüber der Umgebung der USV geschlossenen System geführt. Dabei tritt sie aus dem Gehäuse mit den von dem Leistungsstrom durchflossenen elektrischen und elektronischen Bauteilen in einen Wärmetauscher ein und kehrt aus dem Wärmetauscher in das Gehäuse zurück. Die Kühlluft kann also im Normalbetrieb der USV keine Verunreinigungen in das Gehäuse eintragen, die sich über der Zeit aufbauen. Der Wärmetauscher, der erfindungsgemäß passiv ausgebildet ist, ermöglicht es, die der Kühlluft wieder entzogene Wärmeenergie auf ein Kühlmedium zu übertragen, was leicht beispielsweise aus einem abgeschlossenen Innenraum eines Gebäudes, in dem die USV angeordnet ist, abgeführt werden kann. Dies ist gilt insbesondere, wenn das Kühlmedium eine Flüssigkeit ist, die in einem geschlossenen Leitungssystem geführt wird. Zum anderen weist die neue USV Vorkehrungen für einen Notbetrieb auf, falls der Wärmetauscher wegen technischer Defekte im Bereich des Wärmetauschers selbst oder der Versorgung mit Kühlmedium ausfällt. In diesem Fall registriert die Steuerung der neuen USV einen Temperaturanstieg über einen vorgegebenen Grenzwert und stellt dann auf einen Notbetrieb um, bei dem die Kühlluft aus dem Gehäuse in die Umgebung ausgeblasen und von dort wieder in das Gehäuse angesaugt wird. Hierbei wird zwar in Kauf genommen, daß Verunreinigungen in das Gehäuse der USV gelangen, doch gilt dies nur für den Notbetrieb. Dieser Notbetrieb erstreckt sich typischerweise nur über einen kurzen Zeitraum, wie er erforderlich ist, um beispielsweise an die USV als Verbraucher angeschlossene Rechneranlagen kontrolliert herunterzufahren. Danach schaltet die USV zur Verhinderung ihrer Selbstzerstörung aufgrund von Überhitzung in der Regel ab, weil die Wärmeaufnahmekapazität der Umgebungsluft in einem abgeschlossenen Innenraum eines Gebäudes, in dem die USV angeordnet ist, typischerweise eng begrenzt ist. Durch die zweite Betriebsweise wird aber in jedem Fall die Abhängigkeit von dem Wärmetauscher auf ein Maß reduziert, welches der Abhängigkeit von einer separaten Klimaanlage in dem jeweiligen Innenraum eines Gebäudes entspricht, in dem die USV angeordnet ist. Dabei ist zu berücksichtigen, daß ein passiver Wärmetauscher weitaus weniger störanfällig und mit weitaus weniger technischem Aufwand verbunden ist als beispielsweise eine Klimaanlage.

Als Kühlmedium für den Wärmetauscher wird idealerweise Wasser verwendet, welches von einem Wärmeabführsystem für ein ganzes Gebäude zur Verfügung gestellt wird. Wie bereits erläutert, sind solche Wärmeabführsysteme zum Abführen der Abwärme von Klimaanlagen in einzelnen Räumen eines Gebäudes in vielen Gebäuden vorhanden. Dabei erfolgt die Übergabe der Abwärme an die Außenluft in aller Regel durch einen zentralen Wärmetauscher.

Ideale Voraussetzungen für die Verwirklichung der neuen Vorrichtung sind bei dynamischen USV's gegeben, bei denen eine permanent betriebene elektrische Maschine mit Rotor und Stator als elektrisches, in dem Gehäuse angeordnetes Bauteil von dem Leistungsstrom durchflossen wird. Dann kann der Rotor der elektrischen Maschine mit Kühlluftförderorganen versehen werden, die der allein bewegliche Teil der Kühlluftfördermittel sind. Auf diese Weise entfällt die Notwendigkeit für ein zusätzliches Kühlluftgebläse.

Der Wärmetauscher wird vorzugsweise in einem Wärmetauschergehäuse angeordnet, das direkt an das Gehäuse mit dem elektrischen oder elektronischen Bauteil angebaut ist. Das heißt, das Gehäuse und das Wärmetauschergehäuse bilden dann eine Baueinheit.

An dem Wärmetauschergehäuse können auf der Kühllufteintrittsseite eine von der Steuerung offen- und verschließbare Kühlluftaustrittsöffnung und auf der Kühlluftaustrittsseite des Wärmetauschers eine von der Steuerung äffen- und verschließbare Kühllufteintrittsöffnung ausgebildet sein. Diese Kühlluftöffnungen ermöglichen es, daß die Kühlluft in der zweiten Betriebsweise der neuen Vorrichtung an dem Wärmetauscher vorbei durch die Umgebung der USV, also insbesondere durch einen abgeschlossenen Innenraum eines Gebäudes, in dem die USV angeordnet ist, zirkuliert.

Die Erfindung wird im folgenden anhand eines Ausführungsbeispiels näher erläutert und beschrieben. Dabei zeigt
- Figur 1: eine Übersicht über die Anordnung der Vorrichtung in einem Innenraum und
- Figur 2: den prinzipiellen Aufbau der Vorrichtung.

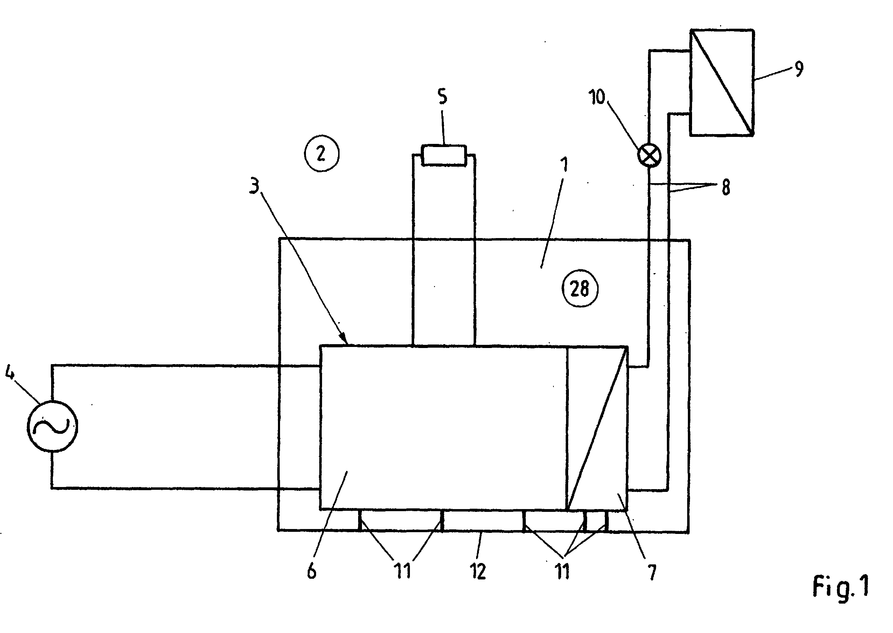

In Figur 1 ist ein abgeschlossener Innenraum 1 skizziert, der für einen Innenraum 1 eines Gebäudes steht, beispielsweise für einen Kellerraum ohne permanente Verbindung mit der Außenluft 2, um allein hierdurch ausreichend Kühlluft für die Kühlung einer Vorrichtung 3 zur unterbrechungsfreien Stromversorgung (im folgenden USV) bereitzustellen. Die USV 3 dient zur Überbrückung von Unterbrechungen einer Wechselstromquelle 4 bei der Versorgung mindestens eines Verbrauchers 5. Die Wechselstromquelle 4 ist in der Regel ein öffentliches Stromnetz. Der Verbraucher 5 ist typischerweise nicht in dem Innenraum 1 sondern irgendwo anders in dem jeweiligen Gebäude angeordnet. Die USV 3 weist ein Gehäuse 6 auf, in dem elektrische und elektronische Bauteile vorgesehen sind, welche von einem Leistungsstrom durchflossen werden. Dabei wird elektrische Energie in Wärmeenergie umgewandelt. Typischerweise liegt die so anfallende Verlustleistung der USV 3 im Bereich von ca. 2 bis 3 % der gesamten elektrischen Energie, die von der Wechselstromquelle 4 an die USV 3 abgegeben wird. Dies bedeutet, daß bei relativ großen Energiemengen auch relativ große Wärmemengen in dem Gehäuse 6 anfallen. Diese Wärmemengen werden von Kühlluft, die in dem Gehäuse 6 umgewälzt wird, in einem Wärmetauscher 7 an ein Kühlmedium weitergegeben. Das Kühlmedium wird durch Leitungen 8 zu einem Wärmetauscher 9 geführt, der die Wärmeenergie von dem Kühlmedium an die Außenluft 2 abgibt und dazu außerhalb des jeweiligen Gebäudes oder außen an diesem Gebäude angeordnet ist. Das wieder abgekühlte Kühlmedium wird von dem Wärmetauscher 9 zu dem Wärmetauscher 7 zurückgeleitet. Für die Zirkulation des Kühlmediums durch die Leitungen 8 und die Wärmetauscher 7 und 9 ist typischerweise eine Umwälzpumpe 10 vorgesehen.

Die bis hierher beschriebene Betriebsweise der USV 3 und der zugehörigen Kühleinrichtungen entspricht dem Normalbetrieb der USV 3. Wenn der Wärmetauscher 7 ausfällt, beispielsweise weil er selber defekt ist, oder weil ihm kein ausreichend kaltes Kühlmedium mehr zugeführt wird, schaltet die USV 3 auf einen Notbetrieb um, in dem sie die in dem Gehäuse 6 umgewälzte Kühlluft nicht mehr in den Wärmetauscher 7 sondern direkt in ihre Umgebung 28 innerhalb des Innenraums 1 ausbläst und von dort neue Kühlluft in das Gehäuse 6 ansaugt. Hierdurch wird die Umgebung 28 der USV 3, d. h. das Innere des Innenraums 1 aufgeheizt. So ist zwar kein Dauerbetrieb der USV 3 möglich, die gewonnene Zeit bis zu einer drohenden Überhitzung der USV 3 ist aber ausreichend, um beispielsweise eine Rechneranlage als Verbraucher 5 sicher herunterzufahren. Füße 11 der USV 3 dienen als Abstandhalter für das Gehäuse 6 und den Wärmetauscher 7 zum Boden 12 des Innenraum 1, damit auch aus den Leitungen 8 oder den Wärmetauscher 7 auslaufendes flüssiges Kühlmedium die Funktion der USV 3 im Notbetrieb nicht gefährdet.

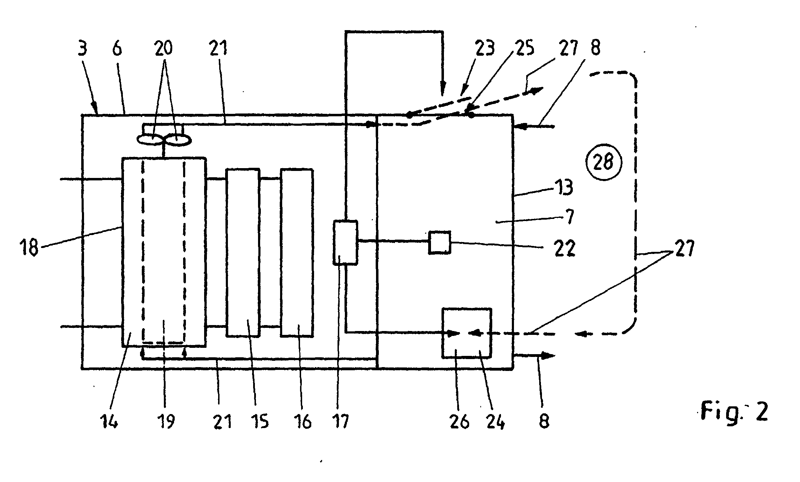

Figur 2 zeigt stark vereinfacht den Aufbau der USV 3 im Inneren des Gehäuses 6 sowie im Bereich eines Wärmeaustauschergehäuses 13 des Wärmetauschers 7. In dem Gehäuse 6 sind verschiedene elektrische und elektronische Bauteile angeordnet, die teilweise von einem Leistungsstrom durchflossen werden. Hierzu gehören eine elektrische Maschine 14 sowie weitere Bauteile 15 und 16. Eine Steuerung 17 zum Umschalten der USV 3 vom Regelbetrieb auf den Notbetrieb wird nicht von einem Leistungsstrom, sondern nur von eigenen Versorgungs- und Steuerströmen durchflossen. Die elektrische Maschine 14 weist einen Stator 18 und einen Rotor 19 auf. Der Rotor 19 dient als Schwungmasse für einen kinetischen Energiespeicher, in dem die elektrische Maschine 14 als Motor betrieben wird. Zur Rückgewinnung der gespeicherten kinetischen Energie wird die elektrische Maschine 14 als Generator betrieben. An dem Rotor 19 der elektrischen Maschine 14 sind Kühlluftförderorgane 20 angeordnet, die mit dem Rotor 19 permanent umlaufen und für die Förderung der Kühlluft 21 durch das Gehäuse 6 dienen. Das heißt, allein durch die Luftförderorgane 20 wird die Kühlluft 21 in das Gehäuse 6 eingesaugt, in dem Gehäuse 6 umgewälzt und wieder aus dem Gehäuse 6 ausgeblasen. Ausgeblasen wird die Kühlluft 21 in den Wärmetauscher 7, dessen Gehäuse 13 direkt und dichtend an das Gehäuse 6 angebaut ist. Die in dem Wärmetauscher 7 abgekühlte Kühlluft wird dann wieder in das Gehäuse 6 eingesaugt. Wenn ein Temperatursensor 22 an dem Wärmetauscher 7, d. h. direkt in dem Wärmetauscher 7, an ihm oder im Bereich der Leitungen 8 eine Temperatur registriert, die oberhalb eines vorgegebenen Grenzwerts liegt, steuert die Steuerung hier nicht dargestellte Aktuatoren an, die Klappen 23 und 24 öffnen, welche in dem Regelbetrieb der USV 3 eine Kühlluftaustrittsöffnung 25 und eine Kühllufteintrittsöffnung 26 verschließen. Die Kühlluftaustrittsöffnung 25 befindet sich im Wärmetauschergehäuse 13 im Kühllufteintrittsbereich, während sich die Kühllufteintrittsöffnung 26 in dem Wärmetauschergehäuse 13 im Kühlluftaustrittsbereich des Wärmetauschers 7 befindet. Die Kühlluftaustrittsöffnung 25 und die Kühllufteintrittsöffnung 26 könnten auch direkt in dem Gehäuse 6 vorgesehen sein, das die elektrischen und elektronischen Bauteile 14 bis 17 aufnimmt. Durch ihre Anordnung in dem Wärmetauschergehäuse 13 ist es aber besonders einfach möglich, bestehende luftgekühlte USV's durch einen Wärmetauscher 7 zu ergänzen. Dabei kann auch die Steuerung 17 im Bereich des Wärmetauschers 7 vorgesehen sein, obwohl eine Nachrüstung in dem Gehäuse 6 diesbezüglich unproblematisch ist. Gestrichelte Pfeile 27 deuten die Strömung der Kühlluft 27 durch die Umgebung 28 der USV 3 an. Nur im Notbetrieb der USV 3 ist der Kreislauf der Kühlung 21 nicht vollständig abgeschlossen.

### BEZUGSZEICHENLISTE

- 1 -: Innenraum
- 2 -: Außenluft
- 3 -: Vorrichtung (USV)
- 4 -: Wechselstromquelle
- 5 -: Verbraucher
- 6 -: Gehäuse
- 7 -: Wärmetauscher
- 8 -: Leitung
- 9 -: Wärmetauscher
- 10 -: Umwälzpumpe

- 11 -: Fuß
- 12 -: Boden
- 13 -: Wärmetauschergehäuse
- 14 -: elektrische Maschine
- 15 -: elektrisches Bauteil
- 16 -: elektronisches Bauteil
- 17 -: Steuerung
- 18 -: Stator
- 19 -: Rotor
- 20 -: Kühlluftförderorgan

- 21 -: Kühlluft
- 22 -: Temperatursensor
- 23 -: Klappe
- 24 -: Klappe
- 25 -: Kühlluftaustrittsöffnung
- 26 -: Kühllufteintrittsöffnung
- 27 -: Pfeil
- 28 -: Umgebung

## Patentansprüche

1. Vorrichtung für eine unterbrechungsfreien Stromversorgung zur Zwischenschaltung zwischen eine Wechsel- oder Drehstromquelle (4), deren Unterbrechungen zu überbrücken sind, und mindestens einen mit Wechsel- oder Gleichstrom zu versorgenden Verbraucher (5),
- wobei die Vorrichtung (3), die zur Anordnung in einem abgeschlossenen Innenraum (1) eines Gebäudes vorgesehen ist,
- ein Gehäuse (6),
- mindestens ein elektrisches oder elektronisches Bauteil (14 bis 16), das in dem Gehäuse angeordnet (6) ist und das von einem Leistungsstrom durchflossen wird, wobei elektrische Energie in Wärmeenergie umgewandelt wird, und
- Kühlluftfördermittel zum Ansaugen von Kühlluft (21) in das Gehäuse (6), zum Umwälzen der Kühlluft (21) in dem Gehäuse (6) und zum Ausblasen der Kühlluft (21) aus dem Gehäuse (6), um die Wärmeenergie abzuführen,
aufweist, und
- wobei eine Einrichtung vorgesehen sind, um der aus dem Gehäuse (6) ausgeblasenen Kühlluft (21) die Wärmeenergie wieder zu entziehen und auf ein Kühlmedium zu übertragen,
**dadurch gekennzeichnet,**
- **daß** bei einer ersten Betriebsweise der Vorrichtung (3) die aus dem Gehäuse (6) ausgeblasene Kühlluft (21) in einen passiven Wärmetauscher (7) eintritt,
- der als die Einrichtung vorgesehen ist, die der aus dem Gehäuse (6) ausgeblasenen Kühlluft (21) die Wärmeenergie wieder entzieht und auf das Kühlmedium überträgt, und
- aus dem die Kühlluft (21) anschließend wieder in das Gehäuse (6) angesaugt wird,
- wobei das Gehäuse (6), der Wärmetauscher (7) und etwaige dazwischen geschaltete Kühlluftleitungen gegenüber ihrer Umgebung (28) in dem Innenraum (1) abgedichtet sind,
- **daß** bei einer zweiten Betriebsweise der Vorrichtung (3) die Kühlluft (21) aus dem Gehäuse (6) in die Umgebung (21) in dem Innenraum (1) ausgeblasen und von dort wieder in das Gehäuse angesaugt (6) wird,
- **daß** eine Steuerung (17) vorgesehen ist, die von der ersten Betriebsweise auf die zweite Betriebsweise umschaltet, wenn ein Temperatursensor (22) an dem Wärmetauscher (7) eine Temperatur registriert, die oberhalb eines vorgegebenen Grenzwerts liegt, und
- **daß** die Leitungen (8) für das Kühlmedium Teil eines Wärmeabfuhrsystems für ein ganzes Gebäude oder zumindest für wesentliche Teile eines Gebäudes sind.

2. Vorrichtung nach Anspruch 1, **dadurch gekennzeichnet, daß** das Kühlmedium eine Flüssigkeit ist.

3. Vorrichtung nach Anspruch 2, **dadurch gekennzeichnet, daß** die Flüssigkeit Wasser ist.

4. Vorrichtung nach einem der Ansprüche 1 bis 3, **dadurch gekennzeichnet, daß** Leitungen (8) für das Kühlmedium zu einem außerhalb eines Gebäudes oder außen an einem Gebäude angeordneten Wärmetauscher (9) mit der Außenluft führen, wobei die Vorrichtung (3) in einem Innenraum (1) des Gebäudes angeordnet ist.

5. Vorrichtung nach einem der Ansprüche 1 bis 4, **dadurch gekennzeichnet, daß** eine permanent betriebene elektrische Maschine (14) mit Rotor (18) und Stator (19) als elektrisches, in dem Gehäuse (6) angeordnetes Bauteil von dem Leistungsstrom durchflossen wird.

6. Vorrichtung nach Anspruch 5, **dadurch gekennzeichnet, daß** der Rotor (19) der elektrischen Maschine (14) mit Kühlluftförderorganen (20) versehen ist, die Teil der Kühlluftfördermittel sind.

7. Vorrichtung nach Anspruch 6, **dadurch gekennzeichnet, daß** die Kühlluftförderorgane (20) der allein bewegliche Teil der Kühlluftfördermittel sind.

8. Vorrichtung nach einem der Ansprüche 1 bis 7, **dadurch gekennzeichnet, daß** der Wärmetauscher (7) für die Kühlluft ein Wärmetauschergehäuse (13) aufweist, das direkt an das Gehäuse (6) mit dem elektrischen oder elektronischen Bauteil angebaut ist.

9. Vorrichtung nach einem der Ansprüche 1 bis 8, **dadurch gekennzeichnet, daß** der Wärmetauscher (7) für die Kühlluft ein Wärmetauschergehäuse (13) aufweist, in dem auf der Kühllufteintrittsseite eine von der Steuerung (17) öffenbare Kühlluftaustrittsöffnung (25) und auf der Kühlluftaustrittsseite des Wärmetauschers (7) eine von der Steuerung öffenbare Kühllufteintrittsöffnung (26) ausgebildet ist.

## Claims

1. A device for supplying uniterrupted power to be inserted between an alternating or rotary current power supply (4) interruptions of which are to be compensated for, and at least one load which is to be supplied with alternating or direct current,
- the system (3) which is provided for arrangement in a closed inner room (1) of a building comprising:
- a housing (6) ;
- at least one electrical or electronic component (14 to 16) which is located within the housing (6) and through which a power current flows, electric energy being transformed into heat energy; and
- cooling air transport means for sucking cooling air (21) into the housing (6), for circulating the cooling air (21) within the housing (6), and for blowing the cooling air out of the housing (6) to remove the heat energy; and
- a means being provided for removing the heat energy from the cooling air (21) blown out of the housing, and for transferring it to a cooling medium;
**characterized in**
**that**, in a first operation mode of the device (3), the cooling air (21) blown out of the housing (6) enters into a passive heat exchanger (7),
- which is provided as the means removing the heat energy from the cooling air (21) blown out of the housing and transferring it to a cooling medium, and
- out of which the cooling air (21) is then sucked into the housing (6) again;
- said housing (6), said heat exchanger (7) and any cooling air pipes inserted there between being sealed against their surroundings (28) within the inner room (1);
- **that**, in a second operation mode of the device (3), the cooling air (21) is blown out of the housing (6) into the surroundings (28) of the housing (16) in the inner room (1) and is sucked from there into the housing (6) again;
- **that** a control unit (17) is provided which switches from the first operation mode into the second operation mode, if a temperature sensor (22) at the heat exchanger (7) detects a temperature which is above a predetermined threshold value; and
- **that** the pipes (8) for the cooling medium form a part of a heat removal system for an entire building or for at least essential parts of a building.

2. The device of claim 1, **characterized in that** the cooling medium is a liquid.

3. The device of claim 2, **characterized in that** the liquid is water.

4. The device of any of the claims 1 to 3, **characterized in that** pipes (8) for the cooling medium lead to an air heat exchanger (9) which is arranged outside a building or at the outside of a building, the device (3) being arranged in an inner room (1) of the building.

5. The device of any of the claims 1 to 4, **characterized in that** the power current is flowing through a permanently operated electrical machine (14) having a rotor (18) and a stator (19) as an said electrical component, which is located within the housing (6).

6. The device of claim 5, **characterized in that** the rotor (19) of the electrical machine (14) is provided with cooling air transport elements (20) which form a part of the cooling air transport means.

7. The device of claim 6, **characterized in that** the cooling air transport elements (20) form the only moving part of said cooling air transport means.

8. The device of any of the claims 1 to 7, **characterized in that** the heat exchanger (7) for the cooling air has a heat exchanger housing (13) which is directly attached to the housing (6) containing the electrical or electronic component.

9. The device of any of the claims 1 to 9, **characterized in that** the heat exchanger (7) for the cooling air has a heat exchanger housing (13) which has, at the cooling air input side, an cooling air outlet port (25) openable by the control unit (17), and, at the cooling air output side of the heat exchanger (7), an cooling air intake port (16) openable by the control unit.

## Revendications

1. Dispositif d'alimentation en courant sans interruption, afin de commuter entre une source de courant alternatif ou une source de courant triphasé (4) dont les interruptions doivent être évitées, et au moins un récepteur (5) à alimenter en courant alternatif ou courant continu,
- le dispositif (3), qui est prévu pour être disposé dans un local intérieur (1) fermé d'un bâtiment, comportant
- un boîtier (6),
- au moins un composant (14 à 16) électrique ou électronique qui est disposé dans le boîtier (6) et qui est traversé par un courant de puissance, l'énergie électrique étant convertie en énergie thermique, et
- des moyens de transport de l'air de refroidissement pour aspirer l'air de refroidissement (21) dans le boîtier (6), pour brasser l'air de refroidissement (21) dans le boîtier (6) et pour souffler l'air de refroidissement (21) hors du boîtier (6) afin de dissiper l'énergie thermique, et
- un dispositif étant prévu pour soustraire à nouveau l'énergie thermique, de l'air de refroidissement (21) expulsé du boîtier (6), et la transférer à un fluide de refroidissement,
**caractérisé en ce que**
- dans un premier mode de fonctionnement du dispositif (3), l'air de refroidissement (21) expulsé du boîtier (6) pénètre dans un échangeur de chaleur (7) passif,
- qui est prévu en tant que dispositif qui soustrait à nouveau l'énergie thermique, de l'air de refroidissement (21) expulsé du boîtier (6), et la transfère au fluide de refroidissement, et
- duquel l'air de refroidissement (21) est ensuite aspiré à nouveau dans le boîtier (6),
- le boîtier (6), l'échangeur de chaleur (7) et d'éventuelles conduites d'air de refroidissement montées entre eux étant rendus étanches, par rapport à leur milieu ambiant (28) dans le local intérieur (1),
- **en ce que** dans un deuxième mode de fonctionnement du dispositif (3), l'air de refroidissement (21) est expulsé du boîtier (6) dans le milieu ambiant (21) du local intérieur (1) et de là est aspiré à nouveau dans le boîtier (6),
- **en ce qu'**il est prévu une commande (17) qui commute du premier mode de fonctionnement au deuxième mode de fonctionnement lorsqu'un capteur de température (22) enregistre sur l'échangeur de chaleur (7) une température qui est supérieure à une valeur limite prédéfinie, et
- **en ce que** les conduites (8) pour le fluide de refroidissement font partie d'un système de dissipation de chaleur pour tout un bâtiment ou au moins pour des parties essentielles d'un bâtiment.

2. Dispositif selon la revendication 1, **caractérisé en ce que** le fluide de refroidissement est un liquide.

3. Dispositif selon la revendication 2, **caractérisé en ce que** le liquide est de l'eau.

4. Dispositif selon l'une des revendications 1 à 3, **caractérisé en ce que** les conduites (8) pour le fluide de refroidissement mènent vers un échangeur de chaleur (9) avec l'air extérieur, disposé à l'extérieur d'un bâtiment ou sur le côté extérieur d'un bâtiment, le dispositif (3) étant disposé dans un local intérieur (1) du bâtiment.

5. Dispositif selon l'une des revendications 1 à 4, **caractérisé en ce qu'**une machine électrique (14), fonctionnant en permanence, avec rotor (18) et stator (19), est traversée en tant que composant électrique disposé dans le boîtier (6), par le courant de puissance.

6. Dispositif selon 1a revendication 5, **caractérisé en ce que** le rotor (19) de la machine électrique (14) est pourvu d'organes de transport d'air de refroidissement (20) qui font partie des moyens de transport d'air de refroidissement.

7. Dispositif selon la revendication 6, **caractérisé en ce que** les organes de transport d'air de refroidissement (20) constituent la seule partie mobile des moyens de transport d'air de refroidissement.

8. Dispositif selon l'une des revendications 1 à 7, **caractérisé en ce que** l'échangeur de chaleur (7) pour l'air de refroidissement, comporte un boîtier d'échangeur de chaleur (13) qui est directement monté sur le bâtiment (6) avec le composant électrique ou électronique.

9. Dispositif selon l'une des revendications 1 à 8, **caractérisé en ce que** l'échangeur de chaleur (7) pour l'air de refroidissement comporte un boîtier d'échangeur de chaleur (13) dans lequel, sur le côté d'entrée de l'air de refroidissement, est réalisée une ouverture de sortie d'air de refroidissement (25) qui peut être ouverte par la commande (17) et, sur le côté de sortie de l'air de refroidissement de l'échangeur de chaleur (7), il est réalisé une ouverture d'entrée d'air de refroidissement (27) qui peut être ouverte par la commande.
